# EUROPÄISCHE PATENTSCHRIFT

(11) **EP 3 652 819 B1**
(45) Veröffentlichungstag und Bekanntmachung des Hinweises auf die Patenterteilung: **26.10.2022**
(21) Anmeldenummer: 18749308.5
(22) Anmeldetag: 12.07.2018
(51) Int. Cl.: H01S 3/00, H01S 3/23, H01S 3/11, G02F 1/35, G02F 1/39, G01N 21/65

(54) **ERZEUGUNG VON SYNCHRONISIERTEN LASERPULSEN BEI VARIABLEN WELLENLÄNGEN**
GENERATING SYNCHRONIZED LASER PULSES AT VARIABLE WAVELENGTHS
GÉNÉRATION D'IMPULSIONS LASER SYNCHRONISÉES À DES LONGUEURS D'ONDE VARIABLES

(30) Priorität: 12.07.2017 DE 102017115687
(43) Veröffentlichungstag der Anmeldung: 20.05.2020
(73) Patentinhaber: Fraunhofer-Gesellschaft zur Förderung der angewandten Forschung e.V., 80686 München (DE); Friedrich-Schiller-Universität Jena, 07743 Jena (DE); Leibniz-Institut für Photonische Technologien e.V., 07745 Jena (DE)
(72) Erfinder: GOTTSCHALL, Thomas, 07745 Jena (DE); LIMPERT, Jens, 07751 Jena (DE); TÜNNERMANN, Andreas, 99425 Weimar (DE); MEYER-ZEDLER, Tobias, 07745 Jena (DE); POPP, Jürgen, 07751 Jena (DE)
(74) Vertreter: Schneiders & Behrendt Bochum
(86) Internationale Anmeldenummer: PCT/EP2018/068875
(87) Internationale Veröffentlichungsnummer: WO 2019/012020

(56) Entgegenhaltungen:
- EIBL MATTHIAS ET AL: "Hyperspectral stimulated Raman microscopy with two fiber laser sources", PROGRESS IN BIOMEDICAL OPTICS AND IMAGING, SPIE - INTERNATIONAL SOCIETY FOR OPTICAL ENGINEERING, BELLINGHAM, WA, US, Bd. 9536, 14. Juli 2015 (2015-07-14), Seiten 953604-1-953604-6, XP060056521, ISSN: 1605-7422, DOI: 10.1117/12.2183822 ISBN: 978-1-5106-0027-0
- CHI ZHANG ET AL: "Fiber-Optical Parametric Amplifier With High-Speed Swept Pump", IEEE PHOTONICS TECHNOLOGY LETTERS, IEEE SERVICE CENTER, PISCATAWAY, NJ, US, Bd. 23, Nr. 14, 1. Juli 2011 (2011-07-01), Seiten 1022-1024, XP011357810, ISSN: 1041-1135, DOI: 10.1109/LPT.2011.2151852
- RUI ZHU ET AL: "Dual-Band Time-Multiplexing Swept-Source Optical Coherence Tomography Based on Optical Parametric Amplification", IEEE JOURNAL OF SELECTED TOPICS IN QUANTUM ELECTRONICS, IEEE SERVICE CENTER, PISCATAWAY, NJ, US, Bd. 18, Nr. 4, 1. Juli 2012 (2012-07-01), Seiten 1287-1292, XP011455354, ISSN: 1077-260X, DOI: 10.1109/JSTQE.2011.2167132

## Beschreibung

Die Erfindung betrifft eine Vorrichtung und eine Verfahren zur Erzeugung von Laserpulsen.

Für die kohärente Raman-Spektroskopie/Mikroskopie (CRS) werden zwei synchronisierte Laserpulszüge mit Repetitionsraten von wenigen MHz bis wenigen zehn MHz benötigt. Dabei muss der Energieabstand zwischen den Zentralwellenlängen der beiden Laserpulszüge den Raman-Resonanzenergien der zu untersuchenden Moleküle entsprechen. Um mehrere Resonanzenergien und damit verschiedene Molekülsorten adressieren zu können, muss der Energieabstand zwischen den beiden Laserpulszügen variabel sein. Außerdem müssen die Laserpulse eine Spitzenleistung von mehr als 1 kW besitzen, damit die resultierenden Messsignale rauscharm sind. Da gleichzeitig die mittlere Leistung (z.B. bei Einsatz an lebendem Gewebe) den mW-Bereich nicht überschreiten sollte, müssen sehr kurze Laserpulse (Pulsdauer zwischen 5 ps und 50 ps) verwendet werden, um die benötigte Pulsspitzenleistung bereit zu stellen. Außerdem muss für CRS die spektrale Bandbreite der Laserpulse weniger als 10 cm⁻¹ (d.h. weniger als 1 nm bei 1000 nm Zentralwellenlänge) betragen. Da sich die spektrale Bandbreite eines transformlimitierten Laserpulses invers proportional zur Pulsdauer verhält, darf die Pulsdauer einen bestimmten Mindestwert nicht unterschreiten. Die Zentralwellenlängen der Laserpulse werden meist im nahen Infrarotbereich gewählt, da in diesem Bereich die Absorption gering ist und die beugungsbegrenzte räumliche Auflösung hoch. Entsprechend sollten die Laserpulse eine minimale Pulsdauer von ca. 1 ps nicht unterschreiten, um bei transformlimitierter Bandbreite den Anforderungen an die spektrale Auflösung zu genügen. Daher ist die Verwendung von Laserpulsen im Bereich von 0,5-100 ps ein Kompromiss aus einer hohen spektralen Auflösung der Ramanresonanzen und der Erzeugung rauscharmer Messsignale durch die Anregung mit hoher Pulsspitzenleistung bei einer verträglichen mittleren Leistung.

Ein auf optischen Fasern basierender Aufbau, der synchronisierte Pulszüge mit den vorgenannten Parametern erzeugt, ist aus der WO 2015/063063 A1 bekannt. Der Aufbau umfasst einen auf Vierwellenmischung basierenden optisch parametrischen Oszillator (OPO). Der OPO wandelt, abhängig von der Wellenlänge und der Repetitionsfrequenz des Pumplasers, einen Teil des Lichts in Laserpulse bei einer kleineren Wellenlänge (Signalwellenlänge) und einen anderen Teil in Laserpulse bei einer größeren Wellenlänge (Idlerwellenlänge) um. Die so erzeugten Laserpulszüge sind inhärent synchronisiert und können für (bildgebende) CRS-Verfahren verwendet werden.

Bei der auf dem CRS-Verfahren basierenden Laserscanning-Mikroskopie werden die synchronisierten Pulszüge auf eine biologische Probe fokussiert, die zur Erzeugung eines Bildes in einer Ebene räumlich abgetastet wird, indem der Fokus rasterförmig in zwei Dimensionen über die Probe bewegt wird. Dadurch kann z.B. eine räumliche Konzentrationsverteilung von Molekülen bei einer bestimmten Raman-Resonanz untersucht werden. Zur Identifizierung und mikroskopischen Vermessung der räumlichen Verteilung verschiedener Moleküle, z.B. zur Klassifizierung von Gewebetypen, ist es nötig, die Probe bei verschiedenen Raman-Resonanzen zu vermessen. Da die bildweise Vermessung der Probe bei verschiedenen Resonanzen bei lebendem Gewebe und in vivo durch Bewegungsartefakte schwierig ist, ist ein schnelles Umschalten zwischen den Raman-Resonanzen, d.h. ein schnelles Umschalten zwischen verschiedenen Wellenlängen der Laserpulse, wünschenswert.

M. A. B. Rinkmann et al. ("Electronically and rapidly tunable fiber-integrable optical parametric oscillator for nonlinear microscopy," Opt. Lett. 41, 2193-2196, 2016) schlagen vor, bei einem OPO-Konzept unterschiedliche Repetitionsraten der Pump-Laserpulse mittels eines schnellen elektrooptischen Modulators (EOM) zu erzeugen, um auf diese Weise zwischen unterschiedlichen Resonanzen innerhalb von 8 µs umschalten zu können. Hierbei limitiert die Schaltzeit des EOMs und die Einschwingzeit des verwendeten Faser-OPOs die Umschaltzeit.

Mit der vorbekannten Methode ist die Vermessung zweier Raman-Resonanzen mit einer Rate von 62,5 kHz möglich. Ein mikroskopisches Bild kann damit bei einer Auflösung von 500x500 Bildpunkten alle 4 s aufgenommen werden.

Aus M. Eibl et a. "Hyperspectral stimulated Raman microscopy with two fiber laser sources", Proceedings of SPIE, 9536, 953604 (2015) ist ein faserbasierter Aufbau zur stimulierten Ramanmikrokopie bekannt, der auf einem FDML und einem gepulsten Pumplaser basiert deren relative zeitliche Verzögerung variiert wird.

Aufgabe der Erfindung ist es vor diesem Hintergrund, eine Methode zur Erzeugung von synchronisierten Laserpulszügen bei variablen Wellenlängen bereitzustellen, wobei die Umschaltzeit zum Umschalten zwischen verschiedenen Wellenlängen im sub-µs-Bereich liegt.

Diese Aufgabe löst die Erfindung durch ein Vorrichtung zur Erzeugung von Laserpulsen gemäß Anspruch 1.

Die heutzutage schnellste Methode, die Wellenlänge eines Dauerstrichlasers zu verändern, stellt der im Fourier-Raum modengelockte Laser *(engl.* Fourier domain mode-locking laser, hier kurz: FDML-Laser) dar (siehe R. Huber et al., "Fourier Domain Mode Locking (FDML): a new laser operating regime and applications for optical coherence tomography", Optics Express 14, 3225-3237 2006). Dieser Laser kann in einem Zeitraum von wenigen 100 ns durch dessen gesamten Durchstimmbereich gefahren werden. Erfindungsgemäß wird die Strahlung eines solchen FDML-Lasers mit der Strahlung eines als Pumplaser verwendeten Kurzpulslasers in einem nichtlinearen Konversionsmedium überlagert, wo parametrische Verstärkung mittels Differenzfrequenzerzeugung (z.B. in einem doppelbrechenden Kristall) oder mittels Vierwellenmischung (z.B. in einer geeigneten optischen Faser) stattfindet. Innerhalb des Verstärkungsbereichs/Phasenanpassungsbereichs des jeweiligen parametrischen Prozesses wird die Dauerstrich-Laserstrahlung, die im nichtlinearen Konversionsmedium mit der gepulsten Pumpstrahlung überlagert wird, verstärkt, und es formen sich Signal- und Idlerpulse, die die ungefähre Länge der Pumppulse annehmen. Durch die erfindungsgemäße Kombination des FDML-Lasers und des optisch parametrischen Wellenlängenkonverters kann von Puls zu Puls die Zentralwellenlänge innerhalb der Verstärkungsbandbreite des parametrischen Prozesses bzw. des Durchstimmbereichs des FDML-Lasers variiert werden. Die minimale Schaltzeit ist damit nur durch die Repetitionsrate des Pumplasers begrenzt. Schaltzeiten deutlich unterhalb von 1 µs sind damit zu erreichen. Dies ermöglicht die Aufnahme eines vollständigen Bildes mittels CRS-Laserscanning-Mikroskopie bei zwei oder mehr Raman-Resonanzen in weniger als 1 s.

Bei einer bevorzugten Ausgestaltung der erfindungsgemäßen Vorrichtung ist im Strahlengang zwischen dem Pumplaser und dem nichtlinearen Konversionsmedium ein optischer Verstärker angeordnet, der die Laserstrahlung des Pumplasers verstärkt. Auf diese Weise wird für eine ausreichende Intensität der Laserstrahlung des Pumplasers, die den nichtlinearen Konversionsprozess treibt, gesorgt.

Das nichtlineare Konversionsmedium der erfindungsgemäßen Vorrichtung ist bevorzugt eine mikrostrukturierte optische Faser, eine grundmodige Faser, eine multimodige Faser, ein periodisch gepolter doppelbrechender Kristall, ein doppelbrechender Kristall, eine edelgasgefüllte Hohlkernfaser, eine edelgasgefüllte Kagomefaser (siehe F. Couny et al. "Large-pitch kagomestructured hollow-core photonic crystal fiber", Opt. Lett. 31, 3574-3576, 2006) oder eine edelgasgefüllte "negative curvature" Faser (siehe F. Yu et al., "Negative curvature hollow core optical fiber", IEEE J. Sel. Top. Quantum Electron. 22: 4400610, 2016).

Bei der erfindungsgemäßen Vorrichtung erzeugt der Pumplaser die Laserpulse vorteilhaft mit einer Repetitionsrate im Bereich von 1 kHz bis 1 GHz und einer Pulsdauer im Bereich von 1 µs bis 10 fs. Die Repetitionsrate des Pumplasers bestimmt, wie oben erläutert, die Umschaltzeit zwischen verschiedenen Wellenlängen. Die Pulsdauer wird entsprechend den Anforderungen an die Anwendung gewählt.

Die Erfindung betrifft des Weiteren ein Verfahren zur Erzeugung von Laserpulsen gemäß Anspruch 5.

Im Folgenden bezeichnet f_{FDML} die Frequenz der zyklischen Wellenlängenveränderung des FDML-Lasers, d.h. die Folgefrequenz voller Frequenzzyklen, und fₚᵤₘₚ die Repetitionsrate des Pumplasers, der die nichtlineare Konversion treibt.

Bei dem erfindungsgemäßen Verfahren kann prinzipiell zwischen drei Betriebsmodi unterschieden werden.

In dem ersten Betriebsmodus ist die Frequenz der zyklischen Wellenlängenveränderung des FDML-Lasers gleich einem ganzzahligen Vielfachen der Repetitionsrate der Laserpulse des Pumplasers. Es gilt in diesem Betriebsmodus also f_{FDML} - fₚᵤₘₚ = 0. Dabei wird aus der hinsichtlich der Wellenlänge zyklisch veränderlichen Strahlung des FDML-Lasers immer derselbe spektrale Teil durch die Pumppulse selektiert. Es entstehen also ein Signal- und Idlerpulszug mit jeweils zeitlich konstanter Zentralwellenlänge. Dabei bestimmt die absolute Phasendifferenz zwischen dem Durchstimmzyklus des FDML-Lasers und der Pulsrepetition des Pumplasers am Überlagerungsort in dem nichtlinearen Konversionsmedium die Zentralwellenlängen der Signal- und Idlerpulse.

In dem zweiten Betriebsmodus ist die Frequenz der zyklischen Wellenlängenveränderung des FDML-Lasers ungleich einem ganzzahligen Vielfachen der Repetitionsrate der Laserpulse des Pumplasers. Es gilt also f_{FDML} - n · fₚᵤₘₚ ≠ 0.

Dabei wird die sich zyklisch hinsichtlich der Wellenlänge verändernde Dauerstrich-Laserstrahlung des FDML-Lasers mit der Pumprepetitionsrate fₚᵤₘₚ abgetastet, wobei jeder entstehende Signal- und Idlerpuls bei einer anderen Zentralwellenlänge erzeugt wird. Die Schwebungsfrequenz |f_{FDML} - fₚᵤₘₚ| = fₛ ist diejenige Frequenz, mit der sich der Durchstimmzyklus der Signal- und Idlerpulse wiederholt.

In dem dritten Betriebsmodus ist die Repetitionsrate der Laserpulse des Pumplasers gleich einem ganzzahligen Vielfachen der Frequenz der zyklischen Wellenlängenveränderung des FDML-Lasers. Es gilt also fₚᵤₘₚ = n · f_{FDML} (n sei eine natürliche Zahl). In diesem Betriebsmodus werden n unterschiedliche Zentralwellenlängen der FDML-Strahlung ausgewählt und nacheinander in Signal- und Idlerpulse konvertiert. Für z.B. n = 2 können auf diese Art und Weise zwei Raman-Resonanzen abwechselnd abgefragt werden.

Ausführungsbeispiele der Erfindung werden nachfolgend anhand der Zeichnungen näher erläutert. Es zeigen:
- Fig. 1: eine erfindungsgemäße Vorrichtung als Blockdiagramm;
- Fig. 2: Illustration des erfindungsgemäßen Verfahrens in einem ersten Betriebsmodus;
- Fig. 3: Illustration des erfindungsgemäßen Verfahrens in einem zweiten Betriebsmodus;
- Fig. 4: Illustration des erfindungsgemäßen Verfahrens in einer Variante des zweiten Betriebsmodus;
- Fig. 5: Illustration des erfindungsgemäßen Verfahrens in einem dritten Betriebsmodus.

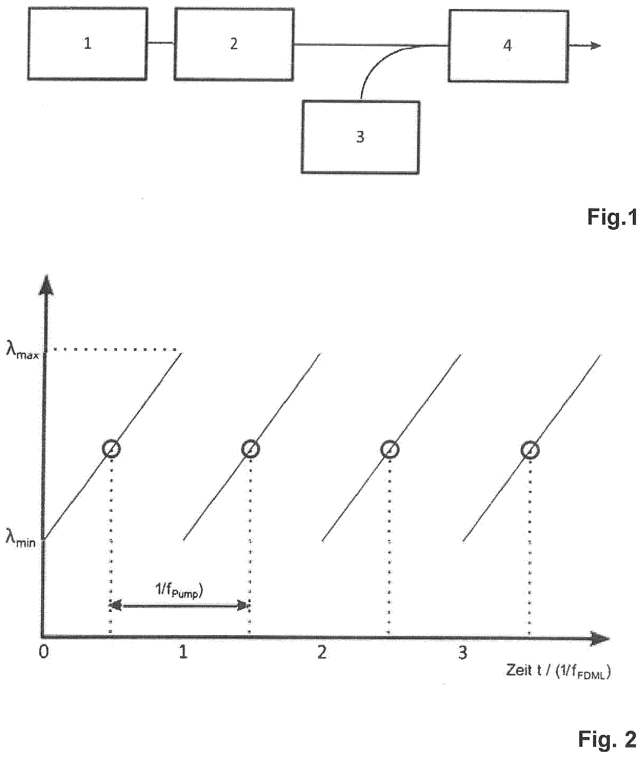

Fig. 1 zeigt schematisch eine erfindungsgemäße Vorrichtung als Blockdiagramm. Diese umfasst einen Pumplaser 1, z.B. einen modengekoppelten Faserlaser, der Laserpulse mit einer Dauer von ca. 30 ps bei einer Repetitionsrate von ca. 20 MHz erzeugt. Die Wellenlänge der gepulsten Laserstrahlung ist fest vorgegeben. Die gepulste Laserstrahlung des Pumplasers 1 wird mittels eines optischen Verstärkers 2, z.B. eine diodengepumpte Verstärkerfaser, verstärkt. Des Weiteren umfasst die Vorrichtung einen FDML-Laser 3, der Dauerstrich-Laserstrahlung bei einer zyklisch veränderlichen Wellenlänge erzeugt. Der Ausgang des optischen Verstärkers 2 und der Ausgang des FDML-Lasers 3 sind über optische Fasern mit einem nichtlinearen Konversionsmedium 4, z.B. einer mikrostrukturierten optischen Faser, verbunden, so dass die verstärkten Laserpulse des Pumplasers 1 und die Laserstrahlung des FDML-Lasers 3 in dem nichtlinearen Konversionsmedium 4 überlagert werden. In diesem wird die gepulste Laserstrahlung des Pumplasers 1 und die Dauerstrich-Laserstrahlung des FDML-Lasers 3 in einem optisch parametrischen Prozess, z.B. durch Vierwellenmischung, in gepulste Laserstrahlung bei einer Signalwellenlänge und einer davon verschiedenen Idlerwellenlänge umgewandelt, die die Vorrichtung am Ausgang des nichtlinearen Mediums 4 (in der Fig. 1 nach rechts) verlässt und z.B. für die CRS-Mikroskopie verwendet werden kann. Aufgrund der zyklischen Veränderung der Wellenlänge der Strahlung des FDML-Lasers 3 wird von Puls zu Puls die Zentralwellenlänge des Signal- bzw. Idlerpulses innerhalb der Verstärkungsbandbreite des parametrischen Prozesses und entsprechend dem Durchstimmbereich des FDML-Lasers 3 variiert.

In den Diagrammen der Fig. 2-5 ist die zyklische Variation der Dauerstrich-Laserstrahlung des FDML-Lasers 3 in dem Wellenlängenbereich zwischen λₘᵢₙ und λₘₐₓ illustriert als Funktion der Zeit (in Einheiten der inversen Frequenz f_{FDML} der zyklischen Wellenlängenveränderung des FDML-Lasers 3). Die vertikalen, gestrichelten Linien zeigen die Abtastung der Strahlung des FDML-Lasers 3 mittels der Strahlung des Pumplasers 1 im nichtlinearen Konversionsmedium 4 bei der Frequenz fₚᵤₘₚ zu den entsprechenden diskreten Zeitpunkten.

In dem in Fig. 2 gezeigten Beispiel ist die Frequenz der zyklischen Wellenlängenveränderung des FDML-Lasers gleich der Repetitionsrate der Laserpulse des Pumplasers. Es gilt also f_{FDML} - fₚᵤₘₚ = 0. Es wird dann aus der hinsichtlich der Wellenlänge zyklisch veränderlichen Strahlung des FDML-Lasers 3 immer derselbe spektrale Teil durch die Pumppulse selektiert. Es entstehen also ein Signal- und Idlerpulszug mit jeweils zeitlich konstanter Zentralwellenlänge. Die Phasendifferenz zwischen dem Durchstimmzyklus des FDML-Lasers 3 und der Pulsrepetition des Pumplasers 1 bestimmt dabei die Zentralwellenlängen der Signal- und Idlerpulse.

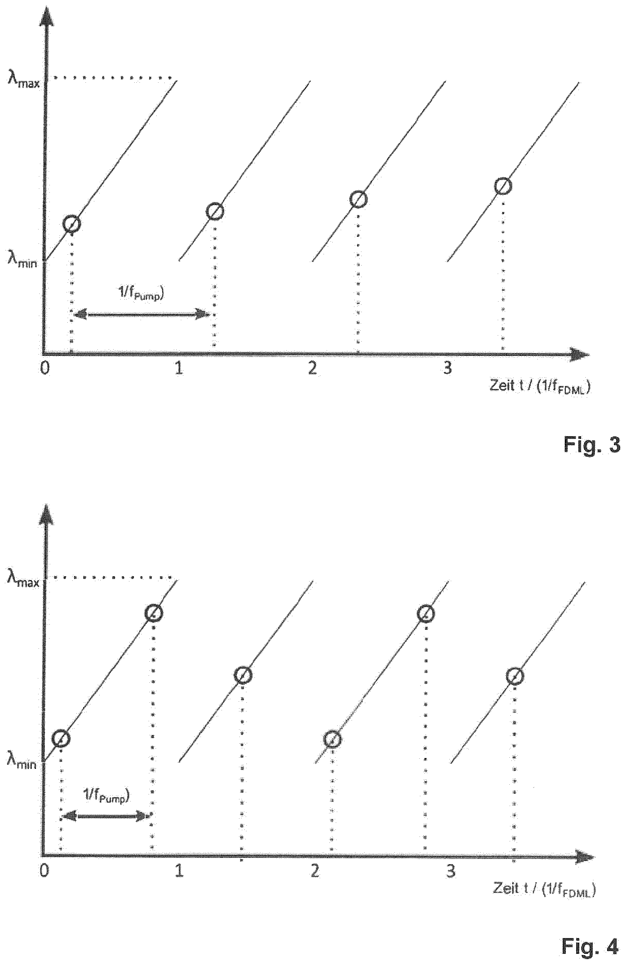

In Fig. 3 ist die Frequenz der zyklischen Wellenlängenveränderung des FDML-Lasers 3 ungleich einem ganzzahligen Vielfachen der Repetitionsrate der Laserpulse des Pumplasers 1. Es gilt also f_{FDML} - n · fₚᵤₘₚ ≠ 0 (dabei ist n eine natürliche Zahl). Dabei wird die sich zyklisch hinsichtlich der Wellenlänge verändernde Dauerstrich-Laserstrahlung des FDML-Lasers 3 mit der Pumprepetitionsrate fₚᵤₘₚ abgetastet, wobei jeder entstehende Signal- und Idlerpuls bei einer anderen Zentralwellenlänge entsteht.

Die Fig. 4 zeigt eine Variante des in Fig. 3 dargestellten Betriebsmodus. In Fig. 4 gilt n · f_{FDML} - m · fₚᵤₘₚ = 0 (dabei sind n und m natürliche Zahlen). Konkret ist im dargestellten Fall n = 2 und m = 3. In diesem Falle ergeben sich zeitlich aufeinanderfolgend drei verschiedene Signal- und Idlerwellenlängen.

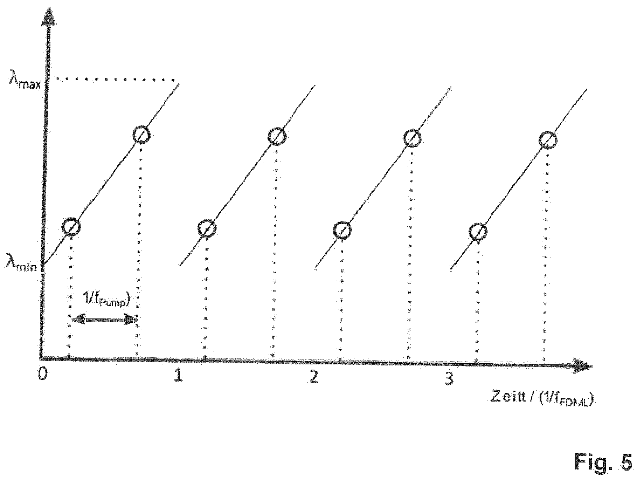

In dem schließlich in Fig. 5 gezeigten Betriebsmodus ist Repetitionsrate der Laserpulse des Pumplasers gleich einem ganzzahligen Vielfachen der Frequenz der zyklischen Wellenlängenveränderung des FDML-Lasers. Es gilt alsofₚᵤₘₚ = n · f_{FDML}. In diesem Betriebsmodus werden n unterschiedliche Zentralwellenlängen der FDML-Strahlung ausgewählt und nacheinander in Signal- und Idlerpulse konvertiert. Für den dargestellten Fall mit n = 2 werden auf diese Art und Weise zwei Wellenlängen abwechselnd selektiert.

In den Diagrammen der Fig. 2-5 hat der zeitliche Wellenlängenverlauf der Strahlung des FDML-Lasers eine sägezahnförmige Charakteristik. Ein anderer Kurvenverlauf ist ohne weiteres denkbar, ohne dass sich dadurch am Funktionsprinzip der Erfindung etwas ändert. In Fig. 3 sorgt die sägezahnförmige Charakteristik dafür, dass die sukzessive selektierten Wellenlängen äquidistant sind.

## Patentansprüche

1. Vorrichtung zur Erzeugung von Laserpulsen, mit
- einem Pumplaser (1), der gepulste Laserstrahlung bei einer vorgegebenen Wellenlänge emittiert,
- einem im Fourier-Raum modengelockten Laser (3), nachfolgend kurz als FDML-Laser bezeichnet, der Dauerstrich-Laserstrahlung bei einer zyklisch veränderlichen Wellenlänge emittiert, und
- einem nichtlinearen Konversionsmedium (4), in dem die gepulste Laserstrahlung des Pumplasers (1) und die Dauerstrich-Laserstrahlung des FDML-Lasers (3) überlagert werden,
**dadurch gekennzeichnet, dass**
diejenige Dauerstrich-Laserstrahlung, die im nichtlinearen Konversionsmedium (4) mit der gepulsten Laserstrahlung des Pumplasers (1) überlagert wird, in einem optisch parametrischen Prozess verstärkt wird, sodass sich innerhalb des Verstärkungs- und Phasenanpassungsbereichs des optisch parametrischen Prozesses Signal- und Idlerpulse bei voneinander verschiedenen Wellenlängen formen, deren Dauer ungefähr die Dauer der gepulsten Laserstrahlung des Pumplasers (1) annimmt.

2. Vorrichtung nach Anspruch 1, **gekennzeichnet durch** einen im Strahlengang zwischen dem Pumplaser (1) und dem nichtlinearen Konversionsmedium (4) angeordneten optischen Verstärker (2), der die Laserstrahlung des Pumplasers (1) verstärkt.

3. Vorrichtung nach Anspruch 1 oder 2, **dadurch gekennzeichnet, dass** das nichtlineare Konversionsmedium (4) eine mikrostrukturierte optische Faser, eine grundmodige Faser, eine multimodige Faser, ein periodisch gepolter doppelbrechender Kristall, ein doppelbrechender Kristall oder eine edelgasgefüllte Hohlkernfaser ist.

4. Vorrichtung nach einem der Ansprüche 1 bis 3, **dadurch gekennzeichnet, dass** der Pumplaser (1) Laserpulse mit einer Repetitionsrate im Bereich von 1 kHz bis 1 GHz und einer Pulsdauer im Bereich von 1 µs bis 10 fs emittiert.

5. Verfahren zur Erzeugung von Laserpulsen, umfassend zumindest die folgenden Schritte:
- Erzeugung von gepulster Laserstrahlung bei einer vorgegebenen Wellenlänge mittels eines Pumplasers (1),
- Erzeugung von Dauerstrich-Laserstrahlung bei einer zyklisch veränderlichen Wellenlänge mittels eines im Fourier-Raum modengelockten Lasers (3), nachfolgend kurz als FDML-Laser bezeichnet, und
- Überlagerung der gepulsten Laserstrahlung des Pumplasers (1) und der Laserstrahlung des FDML-Lasers (3) in einem nichtlinearen Konversionsmedium (4),
**dadurch gekennzeichnet, dass**
diejenige Dauerstrich-Laserstrahlung, die im nichtlinearen Konversionsmedium (4) mit der gepulsten Laserstrahlung des Pumplasers (1) überlagert wird, in einem optisch parametrischen Prozess verstärkt wird, sodass sich innerhalb des Verstärkungs- und Phasenanpassungsbereichs des optisch parametrischen Prozesses Signal- und Idlerpulse bei voneinander verschiedenen Wellenlängen formen, deren Dauer ungefähr die Dauer der gepulsten Laserstrahlung des Pumplasers (1) annimmt.

6. Verfahren nach Anspruch 5, **dadurch gekennzeichnet, dass** der optisch parametrische Prozess auf Differenzfrequenzerzeugung oder auf Vierwellenmischung basiert.

7. Verfahren nach Anspruch 5 oder 6, **dadurch gekennzeichnet, dass** die gepulste Laserstrahlung des Pumplasers (1) vor der Überlagerung mit der Dauerstrich-Laserstrahlung des FDML-Lasers (3) mittels eines optischen Verstärkers (2) verstärkt wird.

8. Verfahren nach einem der Ansprüche 5 bis 7, **dadurch gekennzeichnet, dass** die Repetitionsrate der Laserpulse des Pumplasers (1) im Bereich von 1 kHz bis 1 GHz und die Pulsdauer im Bereich von 1 µs bis 10 fs liegen.

9. Verfahren nach einem der Ansprüche 5 bis 8, **dadurch gekennzeichnet, dass** die Frequenz der zyklischen Wellenlängenveränderung des FDML-Lasers (3) gleich einem ganzzahligen Vielfachen der Repetitionsrate der Laserpulse des Pumplasers (1) ist.

10. Verfahren nach einem der Ansprüche 5 bis 8, **dadurch gekennzeichnet, dass** die Frequenz der zyklischen Wellenlängenveränderung des FDML-Lasers (3) ungleich einem ganzzahligen Vielfachen der Repetitionsrate der Laserpulse des Pumplasers (1) ist.

11. Verfahren nach einem der Ansprüche 5 bis 8, **dadurch gekennzeichnet, dass** die Repetitionsrate der Laserpulse des Pumplasers (1) gleich einem ganzzahligen Vielfachen der Frequenz der zyklischen Wellenlängenveränderung des FDML-Lasers (3) ist.

12. Verwendung einer Vorrichtung nach einem der Ansprüche 1 bis 4 als Lichtquelle zur Erzeugung von synchronisierten Laserpulszügen variabler Wellenlänge in der kohärenten Raman-Spektroskopie oder -Mikroskopie.

## Claims

1. Device for generating laser pulses, comprising
- a pump laser (1), which emits pulsed laser radiation at a specified wavelength,
- a laser (3) that is mode-locked in the Fourier domain, referred to in the following for short as an FDML laser, which emits continuous-wave laser radiation at a cyclically variable wavelength, and
- a non-linear conversion medium (4), in which the pulsed laser radiation of the pump laser (1) and the continuous-wave laser radiation of the FDML laser (3) are superimposed,
**characterised in that**
the continuous-wave laser radiation which is not superimposed, in the non-linear conversion medium (4), with the pulsed laser radiation of the pump laser (1), is amplified in an optical parametric process, such that signal and idler pulses form, at wavelengths different from one another, within the amplification and phase adjustment range of the optical parametric process, the duration of which pulses assumes approximately the duration of the pulsed laser radiation of the pump laser (1).

2. Device according to claim 1, **characterised by** an optical amplifier (2) which is arranged in the beam path between the pump laser (1) and the non-linear conversion medium (4), and which amplifies the laser radiation of the pump laser (1).

3. Device according to either claim 1 or claim 2, **characterised in that** the non-linear conversion medium (4) is a microstructured optical fibre, a fundamental mode fibre, a multimode fibre, a periodically polarised birefringent crystal, a birefringent crystal, or a hollow-core fibre filled with inert gas.

4. Device according to any of claims 1 to 3, **characterised in that** the pump laser (1) emits laser pulses having a repetition rate in the range of from 1 kHz to 1 GHz and a pulse duration in the range of from 1 µs to 10 fs.

5. Method for generating laser pulses, comprising at least the following steps:
- generating pulsed laser radiation at a specified wavelength by means of a pump laser (1),
- generating continuous-wave laser radiation at a cyclically variable wavelength by means of a laser (3) that is mode-locked in the Fourier domain, referred to in the following for short as an FDML laser, and
- superimposing the pulsed laser radiation of the pump laser (1) and the laser radiation of the FDML laser (3) in a non-linear conversion medium (4),
**characterised in that**
the continuous-wave laser radiation which is not superimposed, in the non-linear conversion medium (4), with the pulsed laser radiation of the pump laser (1), is amplified in an optical parametric process, such that signal and idler pulses form, at wavelengths different from one another, within the amplification and phase adjustment range of the optical parametric process, the duration of which pulses assumes approximately the duration of the pulsed laser radiation of the pump laser (1).

6. Method according to claim 5, **characterised in that** the optical parametric process is based on difference-frequency generation or on four-wave mixing.

7. Method according to either claim 5 or claim 6, **characterised in that** the pulsed laser radiation of the pump laser (1) is amplified by means of an optical amplifier (2) prior to the superimposition with the continuous-wave laser radiation of the FDML laser (3).

8. Method according to any of claims 5 to 7, **characterised in that** the repetition rate of the laser pulses of the pump laser (1) is in the range of from 1 kHz to 1 GHz, and the pulse duration is in the range of from 1 µs to 10 fs.

9. Method according to any of claims 5 to 8, **characterised in that** the frequency of the cyclical wavelength change of the FDML laser (3) is equal to a whole number multiple of the repetition rate of the laser pulses of the pump laser (1).

10. Method according to any of claims 5 to 8, **characterised in that** the frequency of the cyclical wavelength change of the FDML laser (3) is different from an integral multiple of the repetition rate of the laser pulses of the pump laser (1).

11. Method according to any of claims 5 to 8, **characterised in that** the repetition rate of the laser pulses of the pump laser (1) is equal to a whole-number multiple of the frequency of the cyclical wavelength change of the FDML laser (3).

12. Use of a device according to any of claims 1 to 4 as a light source for generating synchronised laser pulse trains of variable wavelength in coherent Raman spectroscopy or microscopy.

## Revendications

1. Dispositif pour générer des impulsions laser, avec
- un laser à pompage (1), qui émet un rayonnement laser pulsé pour une longueur d'onde prédéfinie,
- un laser à modes bloqués dans le domaine de Fourier (3), abrégé ci-après par laser FDML , qui émet un rayonnement laser à ondes entretenues pour une longueur d'onde variable cycliquement, et
- un moyen de conversion non linéaire (4), dans lequel le rayonnement laser pulsé du laser à pompage (1) et le rayonnement laser à ondes entretenues du laser FDML (3) sont superposés,
**caractérisé en ce que**
le rayonnement laser à ondes entretenues, qui précisément est superposé au rayonnement laser pulsé du laser à pompage (1) dans le moyen de conversion non linéaire (4), est amplifié dans un processus paramétrique sur le plan optique si bien que des impulsions de signal et des impulsions conjuguées se forment à l'intérieur de la plage d'amplification et d'adaptation de phases du processus paramétrique sur le plan optique pour des longueurs d'ondes différentes les unes des autres, dont la durée adopte approximativement la durée du rayonnement laser pulsé du laser à pompage (1).

2. Dispositif selon la revendication 1, **caractérisé par** un amplificateur (2) optique disposé dans le chemin optique entre le laser à pompage (1) et le moyen de conversion non linéaire (4), qui amplifie le rayonnement laser du laser à pompage (1).

3. Dispositif selon la revendication 1 ou 2, **caractérisé en ce que** le moyen de conversion non linéaire (4) est une fibre optique microstructurée, une fibre à mode fondamental, une fibre à modes multiples, un cristal biréfringent à polarisation périodique, un cristal biréfringent ou une fibre à noyau creux rempli de gaz rare.

4. Dispositif selon l'une quelconque des revendications 1 à 3, **caractérisé en ce que** le laser à pompage (1) émet des impulsions laser avec un taux de répétition dans la plage de 1 kHz à 1 GHz et une durée d'impulsion dans la plage de 1 µs à 10 fs.

5. Procédé pour générer des impulsions laser, comprenant au moins les étapes suivantes :
- la génération d'un rayonnement laser pulsé pour une longueur d'onde prédéfinie au moyen d'un laser à pompage (1),
- la génération d'un rayonnement laser à ondes entretenues pour une longueur d'onde variable cycliquement au moyen d'un laser à modes bloqués dans l'espace de Fourier (3), abrégé ci-après par laser FDML, et
- la superposition du rayonnement laser pulsé du laser à pompage (1) et du rayonnement laser du laser FDML (3) dans un moyen de conversion non linéaire (4),
**caractérisé en ce que**
le rayonnement laser à ondes entretenues, qui précisément est superposé avec le rayonnement laser pulsé du laser à pompage (1) dans le moyen de conversion non linéaire (4), est amplifié dans un processus paramétrique sur le plan optique si bien que des impulsions de signal et des impulsions conjuguées se forment à l'intérieur de la plage d'amplification et d'adaptation de phases du processus paramétrique sur le plan optique pour des longueurs d'ondes différentes les unes des autres, dont la durée adopte approximativement la durée du rayonnement laser pulsé du laser à pompage (1).

6. Procédé selon la revendication 5, **caractérisé en ce que** le processus paramétrique sur le plan optique se base sur la génération de fréquence différentielle ou sur le mélange à quatre ondes.

7. Procédé selon la revendication 5 ou 6, **caractérisé en ce que** le rayonnement laser pulsé du laser à pompage (1) est amplifié au moyen d'un amplificateur optique (2) avant la superposition avec le rayonnement laser à ondes entretenues du laser FDML (3).

8. Procédé selon l'une quelconque des revendications 5 à 7, **caractérisé en ce que** le taux de répétition des impulsions laser du laser à pompage (1) se situent dans la plage de 1 kHz à 1 GHz et la durée d'impulsion se situe dans la plage de 1 µs à 10 fs.

9. Procédé selon l'une quelconque des revendications 5 à 8, **caractérisé en ce que** la fréquence de la variation de longueur d'onde cyclique du laser FDML (3) est identique à un multiple entier du taux de répétition des impulsions laser du laser à pompage (1).

10. Procédé selon l'une quelconque des revendications 5 à 8, **caractérisé en ce que** la fréquence de la variation de longueur d'onde cyclique du laser FDML (3) n'est pas identique à un multiple entier du taux de répétition des impulsions laser du laser à pompage (1).

11. Procédé selon l'une quelconque des revendications 5 à 8, **caractérisé en ce que** le taux de répétition des impulsions laser du laser à pompage (1) est identique à un multiple entier de la fréquence de la variation de longueur d'onde cyclique du laser FDML (3).

12. Utilisation d'un dispositif selon l'une quelconque des revendications 1 à 4 en tant que source de lumière pour générer des trains d'impulsion laser synchronisés à longueur d'onde variable dans la spectroscopie Raman ou la microscopie Raman cohérente.
